(19) Europäisches Patentamt
European Patent Office
Office européen des brevets

(11) Veröffentlichungsnummer: **0 300 418**
**B1**

(12) **EUROPÄISCHE PATENTSCHRIFT**

(45) Veröffentlichungstag der Patentschrift: **02.01.91**

(51) Int. Cl.$^5$: **B 05 D 1/20**

(21) Anmeldenummer: **88111575.2**

(22) Anmeldetag: **19.07.88**

(54) **Schichtelement und Verfahren zur Herstellung von dünnen Schichten.**

(30) Priorität: **24.07.87 DE 3724543**

(43) Veröffentlichungstag der Anmeldung:
**25.01.89 Patentblatt 89/04**

(45) Bekanntmachung des Hinweises auf die Patenterteilung:
**02.01.91 Patentblatt 91/01**

(84) Benannte Vertragsstaaten:
**AT BE CH DE ES FR GB IT LI NL SE**

(56) Entgegenhaltungen:
**MACROMOLECULES, Band 19, 1986, Seiten 1054-1059, American Chemical Society; S.J. MUMBY et al.: "Orientation of poly(octadecyl methacrylate) and poly(octadecyl acrylate) in Langmuir-Blodgett monolayers investigated by polarized infrared spectroscopy"**

(73) Patentinhaber: **BASF Aktiengesellschaft**
**Carl-Bosch-Strasse 38**
**D-6700 Ludwigshafen (DE)**

(72) Erfinder: **Wegner, Gerhard, Prof. Dr.**
**Carl-Zuckmayer-Strasse 1**
**D-6500 Mainz-Drais (DE)**
Erfinder: **Schouten, Arend Jan, Dr.**
**Groninger Weg 70a**
**NL-9321 TD Peize (NL)**
Erfinder: **Duda, Gisela**
**Fritz-Kohl-Strasse 11**
**D-6500 Mainz (DE)**
Erfinder: **Arndt, Thomas**
**St.-Kilian-Strasse 9**
**D-6507 Ingelheim (DE)**

(56) Entgegenhaltungen:
**JOURNAL OF COLLOID AND INTERFACE SCIENCE, Band 84, Nr. 1, November 1981, Seiten 220-227, American Press, Inc.; "Studies of poly-gamma-methyl-L-glutamate monolayers by infrared ATR and transmission spectroscopy and electron microscopy"**

**EP 0 300 418 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft ein Verfahren zur Herstellung von dünnen Schichten organischer Polymerer mit langkettigen Seitengruppen auf einem festen Schichtträger nach der Langmuir-Blodgett-Technik sowie nach diesem Verfahren hergestellte Schichtelemente.

Die Herstellung von Monoschichten organischer Polymerer mit langkettigen Seitengruppen nach der Langmuir-Blodgett-Technik ist bekannt. So untersuchten C. S. Winter et al (Thin Solid Films 134 (1985), Seite 49ff) Langmuir-Blodgett-Filme von Derivaten von Octadec-1-en/Maleinsäureanhydrid-Copolymeren, Polyoctadecylacrylat und Polyoctadecylmethacrylat. Desgleichen untersuchten S. J. Mumby et al (Macromolecules 19 (1986), Seite 1054ff) Langmuir-Blodgett-Schichten der beiden letztgenannten Polymeren. Hier werden maximal 6 Z-Schichten mit konstantem Übertragungsverhältnis angegeben.

H. Nakahara et al (Thin Solid Films 133 (1985), Seite 29ff) untersuchten den Einfluß von Seitenkettenlänge und Hauptkettensteifigkeit auf die Übertragung bei Celluloseestern, Octadecen/Maleinsäureanhydrid-Copolymeren und deren Derivaten.

Auch Monoschichten von Poly-γ-benzyl-L-glutamat und Poly-β-benzyl-L-aspartat (S. Ikeda und T. Isemura, Bull. Chem. Soc. Jpn. 34 (1961), Seite 416ff) sowie Monoschichten von Poly-γ-methyl-L-glutamat (F. Takeda et al, J. Coll. Int. Sci. 87 (1981), Seite 220ff) wurden bereits untersucht.

Aufgabe der vorliegenden Erfindung ist es, ein Verfahren zur Herstellung von dünnen Schichten organischer Polymerer mit langkettigen Seitengruppen nach der Langmuir-Blodgett-Technik aufzuzeigen, das hinsichtlich der Übertragbarketit der Monoschichten verbessert ist und ein konstantes Übertragungsverhältnis aufweist, so daß eine bessere Reproduzierbarkeit gewährleistet ist. Diese Aufgabe läßt sich überraschenderweise durch den Einsatz von organischen Polymeren mit langkettigen Seitengruppen, die ausschließlich über polare Gruppen an die Hauptkette des Polymeren gebundene langkettige n-Alkylseitengruppen enthalten, wobei diese langkettigen n-Alkylseitengruppen teilweise durch kürzerkettige n-Alkylseitengruppen, durch verzweigte oder C—C-Mehrfachbindungen enthaltende Kohlenwasserstoffreste ersetzt sind, erreichen. Es handelt sich dabei also um Kammpolymere mit unterschiedlichen Seitengruppen im selben Molekül.

Gegenstand der vorliegenden Erfindung ist ein Verfahren zur Herstellung von dünnen Schichten organischer Polymerer mit langkettigen Seitengruppen auf einem festen Schichtträger, wobei das organische Polymere in einem organischen Lösungsmittel gelöst, nach der Langmuir-Blodgett-Tecknik an der Grenzfläche Wasser/Luft gespreitet und nach Verdunstung des organischen Lösungsmittels auf einen festen Schichtträger übertragen wird, das dadurch gekennzeichnet ist, daß als organische Polymere mit langkettigen Seitengruppen solche eingesetzt werden, die ausschließlich über polare Gruppen an die Hauptkette des Polymeren gebundene langkettige n-Alkylseitengruppen enthalten, mit der Maßgabe, daß diese langkettigen n-Alkylseitengruppen teilweise durch kürzerkettige n-Alkylseitengruppen, durch verzweigte Alkylseitengruppen mit gleicher oder niedrigerer Anzahl an Kohlenstoffatomen und/oder durch gleichlange oder kürzere Seitengruppen mit mindestens einer C—C-Mehrfachbindung ersetzt sind.

Als polare Gruppen kommen vorzugsweise

—O—,

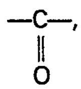,

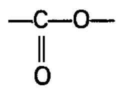 oder

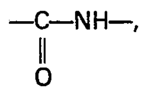, insbesondere

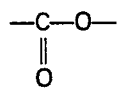

in Betracht.

Als organische Polymere mit langkettigen Seitengruppen können sowohl Copolymerisate als auch Polykondensate eingesetzt werden wobei die Polykondensate bevorzugt helikale Struktur aufweisen.

Das erfindungsgemäße Verfahren zeichnet sich sowohl durch eine verbesserte Übertragbarkeit der Monoschichten, als auch ein konstantes Übertragungsverhältnis sowie bessere Reproduzierbarkeit aus.

Gegenstand der vorliegenden Erfindung sind auch Schichtelemente, die nach dem erfindungsgemäßen Verfahren hergestellt, wurden, wobei die Schichtelemente einen Schichtträger und mindestens eine hierauf aufgebrachte Schicht aufweisen, die fest, dünn und von geordneter, definierter und regelmäßiger Struktur mit gleichförmiger Molekülorientierung in einer Richtung ist und aus einem in

einem organischen, mit Wasser nicht mischbaren Lösungsmittel lölichen organischen Polymeren der oben definierten Art besteht.

Das erfindungsgemäße Verfahren eignet sich beispielsweise zur Herstellung von Filtern für optische Zwecke, zur Verbesserung der Reibungseigenschaften von Materialien, sowie zur Herstellung von Schutzschichten.

Die für das erfindungsgemäße Verfahren einzusetzenden Schichtträger können gegebenenfalls vor dem Auftrag der Copolymerisat-Monoschichten hydrophobiert werden. Im Falle des Auftrags von entsprechenden Copolykondensatmonoschichten ist eine Hydrophobierung des Schichtträgers zweckmäßig.

Zum erfindungsgemäßen Verfahren und zu den Aufbaukomponenten der Polymeren ist im einzelnen folgendes auszuführen. Bevorzugt weisen die Copolymerisate (a) polymerisierte Einheiten einer n-Alkylester- oder n-Alkylethergruppen enthaltenden ethylenisch ungesättigten Verbindung mit mindestens 12 Kohlenstoffatomen im Alkylrest der Ester- oder Ethergruppe und (b) polymerisierte Einheiten mindestens einer weiteren von (a) verschiedenen Alkylester- oder Alkylethergruppen enthaltenden ethylenisch ungesättigten Verbindung auf, wobei der Alkylrest der Ester- oder Ethergruppe entweder eine geringere Anzahl Kohlenstoffatome aufweist als der von (a), verzweigt ist oder mindestens eine C—C Mehrfachbindung enthält.

Beispiele für solche Copolymerisate sind:

Polyvinylalkylether mit 12 bis 36 Kohlenstoffatomen in der n-Alkylkette, wie Polyvinyloctadecylether, dessen geradkettige Octadecylgruppen teilweise durch z.B. Hexadecyl-, Dodecyl-, Decyl-, Nonyl- oder Octyl-, Hexyl-, n-Butyl- oder Isobutylgruppen ersetzt sind;

entsprechende Copolymerisate von Polyvinylalkylketonen unterschiedlicher Kettenlänge;

Poly-N-alkyl-acrylamide oder Poly-N-alkyl-methacrylamide, wobei die langkettigen n-Alkylgruppen 12 bis 36 Kohlenstoffatome enthalten können und teilweise durch n-Alkylreste geringerer Kettenlänge oder verzweigte Alkylreste ersetzt sind;

Polymere Ester der Acrylsäure, Methacrylsäure oder anderer copolymerisierbarer α,β-ethylenisch ungesättigter Monocarbonsäuren mit geradkettigen, mindestens 12, vorzugsweise 16 bis 36 Kohlenstoffatome enthaltenden Alkylgruppen, wobei ein Teil dieser langkettigen n-Alkylgruppen durch n-Alkylgruppen mit um mindestens einem vorzugsweise 2 bis 8 Kohlenstoffatomen kürzeren Alkylrest, durch verzweigte Alkylgruppen mit gleicher oder geringerer Kohlenstoffatomzahl im Alkylrest oder durch Kohlenwasserstoffreste mit gleicher oder geringerer Anzahl an Kohlenstoffatomen, wobei diese Kohlenwasserstoffreste eine oder mehrer C—C-Mehrfachbindungen, beispielsweise —HC=CH— oder —C≡C-Gruppen enthalten, ersetzt sind; die Einführung von C—C-Mehrfachbindungen kann zweckmäßigerweise durch polymeranaloge Umsetzung erfolgen.

Beispiele für langkettige n-Alkyl(meth)acrylate (a) sind Docosyl(meth)acrylat, Eicosyl(meth)acrylat, Octadecyl(meth)acrylat, Hexadecyl(meth)acrylat, Tetradecyl(meth)acrylat und Dodecyl(meth)acrylat.

In den erfindungsgemäß einzuesetzenden Copolymerisaten sind derartige langkettige n-Alkyl(meth)acrylate teilweise durch (b) n-Alkyl(meth)acrylate mit kürzeren n-Alkylresten (z.B. solchen mit 6 bis 16 Kohlenstoffatomen, die bevorzugt um mindestens 4 Kohlenstoffatome kurzer sind als die n-Alkylreste der Estergruppe der Komponente (a)), durch solche mit verzweigten Alkylresten oder durch solche mit —C—C—Mehrfachbindungen ersetzt.

Der Anteil der Komponenten (a) und (b) als einpolymerisierte Einheiten des Copolymeren kann in weiten Grenzen variieren und liegt im allgemeinen zwischen 50 bis 99,5 Mol% der Komponente (a) und 0,5 bis 50 Mol% der Komponente (b).

Bevorzugt sind Copolymerisate mit 80 bis 99,5, insbesondere 85 bis 99 Mol% der Komponente (a) und 0,5 bis 20, insbesondere 1 bis 15 Mol% der Komponente (b).

Besonders geeignet sind Copolymerisate des Octadecyl(meth)acrylats mit einem Alkyl(meth)acrylat mit 6 bis 16 Kohlenstoffatomen in der Alkylgruppe, z.B. mit Hexadecyl(meth)acrylat, Dodecyl(meth)acrylat, Decyl(meth)acrylat, Nonyl(meth)acrylat, Octyl- oder Isooctyl(meth)acrylat, Hexyl(meth)acrylat, Butyl(meth)acrylat oder auch Methyl(meth)acrylat.

Es handelt sich hier also um Copolymerisate, wobei die Menge des modifizierend wirkenden Comonomeren (b) je nach dessen Kettenlänge variieren kann.

(Meth)acrylsäureestercopolymere sind bevorzugt.

Die erfindungsgemäß einzusetzenden Copolymerisate weisen im allgemeinen Polymerisationsgrade zwischen 10 und 200 auf. Bevorzugt sind isotaktische Copolymerisate.

Die erfindungsgemäß zu verwendenden Polykondensate enthalten bevorzugten mindestens zwei voneinander verschiedene Ester- oder Etherseitengruppen, wobei eine der Ester- oder Ethergruppen einen n-Alkylrest mit mindestens 12 Kohlenstoffatomen und die andere entweder einen Alkylrest mit geringerer Anzahl an Kohlenstoffatomen, eine Verzweigung oder mindestens eine C—C-Mehrfachbindung aufweist.

Als Polykondensate mit unterschiedlichen Seitenketten kommen beispielsweise Polyester und insbesondere Polyamide in Betracht. Für Auswahl und Kombination der Seitenketten gilt im wesentlichen das bei den Copolymerisaten gesagte. Unter oden Polyamiden sind besonders die Polyglutamate zu nennen, die in γ-Stellung unterschiedliche Estergruppierungen enthalten, nämlich jeweils einen Alkylrest mit 1 bis 6 bzw. mit 12 bis 36 Kohlenstoffatomen. Bevorzugt sind Poly(γ-octadecyl-L-glutamate), deren Octadecylgruppen durch n-Alkylgruppen mit weniger als 18, vorzugsweise mit 1 bis 16 Kohlenstoffatomen

oder entsprechende verzweigte Alkylreste oder Kohlenwasserstoffreste mit C—C-Mehrfachbindungen teilweise, z.B. zu 2 bis 20 Mol% ersetzt sind.

Beispielhaft für derartige Polykondensate sei Poly(γ-methyl-L-glutamatco-γ-octadecyl-L-glutamat) genannt. Die Herstellung derartiger Cokondensate kann durch polymeranaloge Umsetzung der polymeren Homokondensate, beispielsweise durch teilweise Umesterung des Poly-γ-methyl-L-glutamats mit Stearylalkohol erfolgen [vgl. J. Watanabe, Y. Fukuda, R. Gehani and I. Nematyn, Macromolecules 17 (1984), Seiten 1004ff).

Die Langmuir-Blodgett-Technik, die dazu geeigneten Apparturen und die Voraussetzungen für die Durchführbarkeit dieser Methode sind bekannt, beispielsweise beschreiben in G. L. Gaines , "Insoluble Monolayers at Liquid-Gas-Interfaces", Interscience Publishers, 1966; insbesondere sei auf die Seiten 44 bis 68, 336 bis 340 und 326 bis 330 dieser Monographie hingeweisen.

Die Übertragung der Monoschichten erfolgt im allgemeinen im "flüssiganalogen Zustand".

Die organischen Polymeren werden zweckmäßigerweise in leichtflüchtigen organischen Lösungsmitteln, wie Methylenchlorid, Chloroform, Benzol, Hexan oder Ethylacetat in Konzentrationen von etwa 0,01 bis 1 Gew.% gelöst, das Lösungsmittel aus der auf die Wasseroberfläche aufgebrachten Polymerlösung durch Verdunsten entfernt und die Monoschicht vor der Übertragung auf festen Schichtträger in üblicher Weise vorkomprimiert.

Man arbeitet im allgemeinen bei Temperaturen zwischen 5 und 35, vorzugsweise 10 bis 30°C.

Als Schichträger für die erfindungsgemäßen Schichtelemente, auf die die dünnen, geordneten Schichten wohldefinierter Struktur von organischen Polymeren aufgebracht werden, kommen beliebige feste, vorzugsweise dimensionsstabile, Substrate aus den unterschiedlichsten Materialien in Betracht. Die als Schichtträger dienenden Substrate können z.B. transparent oder lichtundurchlässig, elektrisch leitend oder isolierend sein. Die Oberfläche des Substrats, auf die die dünne Schicht der organischen Polymeren aufgebracht wird, kann hydrophobiert sein. Das Substrat kann aus einem hydrophoben Material bestehen oder die Oberfläche des Substrats kann vor dem Aufbringen der dünnen Schicht des organischen Polymeren in an sich bekannter Weise durch eine geeignete Vorbehandlung hydrophobisiert werden. Die zu beschichtende hydrophobe Oberfläche der Substrate sollte möglichst rein sein, damit die Ausbildung einer dünnen, geordneten Schicht, insbesondere monomolekularer bzw. multimolekularer Schichtstruktur, nicht gestört wird. Beispielsweise kann bei Anwesenheit von oberflächenaktiven Stoffen auf der zu beschichtenden Oberfläche der Substrate die Ausbildung eines guten Monomolekular- bzw. Multimolekular-Films beeinträchtigt werden. Es ist jedoch möglich, daß die als Schichtträger dienenden Substrate auf ihrer zu beschichtenden Oberfläche vor dem Aufbringen der dünnen Schichten des organischen Polymeren zunächst mit einer Zwischenschicht versehen werden, beispielsweise zur Erzielung einer hohen Haftung zwischen der festen, dünnen Schicht des organischen Polymeren und dem Substrat.

Als Materialen für die als Schichtträger dienenden Substrate können beispielsweise Metalle, wie etwa Gold, Platin, Nickel, Palladium, Aluminium, Chrom, Niob, Tantal, Titan oder Stahl verwendet werden. Andere geeignete Materialien für die Substrate sind u.a. Kunststoffe, wie. z.B. Polyester, etwa Polyethylenterephthalat oder Polybutylenterephthalat, Polyvinylchlorid, Polyvinylidenchlorid und Polytetrafluorethylen.

Gleichermaßen kommen beispielsweise Silicium, Glas, Siliciumdioxid, keramische Werkstoffe oder Celluloseprodukte als Materialien für die Substrate in Betracht. Die Oberfläche von Glassubstraten kann — sofern erforderlich — in an sich bekannter Weise, beispielsweise durch Umsetzung mit Alkylsilanen, hydrophobiert werden. Die Auswahl der Substratmaterialien richtet sich u.a. vornehmlich nach dem Verwendungszweck der erfindungsgemäßen Schichtelemente. Für optische Elemente werden in aller Regel transparente, lichtdurchlässige Substrate als Schichtträger eingesetzt. Werden die erfindungsgemäßen Schichtelemente beispielsweise in der Elektrotechnik oder bei elektroschemischen Prozessen verwendet, dienen als Substrate insbesondere elektrisch leitfähige Materialien, wie Metalle, oder Materialien mit elektrisch leitfähigen, insbesonderer metallischen, Oberflächenschichten, wie beispielsweise metallisiert Kunststoffolien.

Die als Schichtträger für die erfindungsgemäßen Schichtelemente dienenden Substrate können in Abhängigkeit von Verwendungszweck beliebige Formen aufweisen. Beispielsweise können sie film-, folien-, platten-, bandförmig oder auch zylinderförmig sein oder unter beliebigen anderen Formen ausgewählt werden. Im allgemeinen wird es sich bei den Schichträgern um flache, ebene Substrate handeln, wie z.B. Filme, Folien, Platten, Bänder oder Bleche. Die zu beschichtende Oberfläche der Substrate ist vorzugsweise glatt, wie es für die Herstellung von dünnen geordneten Schichten mit wohldefinierter Struktur, insbesondere Monomolekularfilmen oder Multimolekularfilmen, üblich ist. Bei den flachen ebenen Substraten, wie Filmen, Folien oder Bändern können erfindungsgemäß die dunnen, geordneten Schichten wohldefinierter Struktur der organischen Polymeren nur auf eine oder beide Oberflächen des Substrats aufgebracht werden.

Es kann vorteilhaft sein, unmittelbar nach der Übertragung der Monomolekularfilme von der Wasseroberfläche auf das Substrat das hergestellte erfindungsgemäße Schichtelement bei erhöhten Temperaturen, im allgemeinen im Bereich von 50 bis 200°C, vorzugsweise im Bereiche von etwa 100 bis 150°C, zu tempern. Der Tempervorgang als solcher kann je nach Art und Dicke der erfingungsgemäßen Schichtelemente beispielsweise zwischen einigen Minuten bis einigen Stunden dauern. Durch den an die Herstellung der erfindungsgemäßen Schichtelemente anschließenden Temperschritt können die

Eigenschaften der erfindungsgemäßen Schichtelemente stabilisiert bzw. auch gezielt variiert werden.

Die Erfindung wird durch die nachfolgenden Beispiele näher erläutert. Die in den Beispielen genannten Teile und Prozente beziehen sich, sofern nicht anders angegeben, auf das Gewicht.

Synthese der Polymethacrylat

Ataktisches Polyoctadecylmethacrylat, Homopolymer und Copolymerisate wurden, wie üblich, durch Radikalpolymerisation in Toluol bei 60 bis 80°C mit Azobisisobutyronitril als Radikalinitiator hergestellt. Nach der Polymerisation wurde das Polymer durch Ausfällen in Methanol aufgearbeitet und durch mehrfaches Umfällen aus Toluol in Methanol gereinigt. Das Polymer wurde schließlich unter Vakuum bei Raumtemperatur getrocknet.

Isotaktisches Polyoctadecylmethacrylat, Homopolymer und Copolymer, wurde anionisch mit Phenylmagnesiumbromid als Initiator polymerisiert (nach dem Verfahren von W. E. Goode et al., J. Pol. Sc. 46, 317 (1960), 47, 75 (1960). Die Aufarbeitung war analog der beim ataktischen Polymeren.

Synthese de Polypeptide

1. Copolykondensat aus γ-methyl-L-glutamat und γ-Stearyl-L-glutamat

Das Poly-γ-methyl-L-glutamat wurde aus der N-Carboxyanhydridverbindung des ω-Methylesters der L-Glutaminsäure durch Polymerisation mit Triethylamin in Dioxan als Initiator bei Raumtemperatur dargestellt. die N-Carboxyanhydridverbindung war durch Phosgenierung des ω-Methylesters der L-Glutaminsäure in Dioxan hergestellt worden (J. L. Houben, A. Fissi, D. Baccrola, N. Rosato and O. Pieroni and F. Ciardelli, Int. J. Biol. Macromol. 5, 94 (1983)). Der Grad der Stearylsubstitution (35% Stearylreste) wurde durch Elementaranalyse bestimmt.

Das Copolykondensat wurde aus Poly-γ-methyl-L-glutamat durch Umsetzung mit Stearylalkohol bei 60°C hergestellt. Als Katalysator diente p-Toluolsulfonsäure (J. Watanabe, Y. Fukuda, R. Gehani and I. Nematyu, Macromolecules 17, 1004 (1984)). Das Molekulargewicht (12000) wurde durch GPC mit Polystyrol als Standard bestimmt.

2. Poly(γ-stearyl-L-glutamat)

Das Homopolymer wurde wie das Poly-γ-methyl-L-glutamat hergestellt. Der ω-Stearylester der L-Glutaminsäure wurde aus L-Glutaminsäure und Stearylalkohol in t-Butanol bei 80°C (als Katalysator konzentrierte Schwefelsäure) dargestellt (Neth. Appl. 6, 500, 089, July 7, 1965; CA, 64, 2159 g (1966).

Molekulargewichte der Polymeren:

| | $\overline{M}n \times 10^3$ | |
|---|---|---|
| ataktisches Polyoctadecylmethacrylat | 7.2 | |
| ataktisches Copolymerisat aus Octadecylmethacrylat und Dodecylmethacrylat | 8 | (13 Grundmol.% Dodecylmethacrylat) |
| isoataktisches Copolymerisat aus Octadecylmethacrylat und Hexadecylmethacrylat | 8 | (5 Grundmol.% Hexadecylmethacrylat) |
| isotaktisches Poly-octadecylmethacrylat | 7 | |
| isotaktisches Poly-octadecylmethacrylat | 15 | |
| Poly-γ-octadecyl-L-glutamat) | 3* | |
| Copolykondensat aus γ-Octadecyl-L-glutamat und γ-Methyl-L-glutamat | ≃12* | (35% Octadecylkgruppen) |

*aus GPC bezogen auf Polystyrol.

## Beispiel 1

Aus der Wasseroberfläche von einer Lauda Langmuir-Filmwaage wurden 100 µl einer 0,1 %igen Lösung des isotaktischen Copolymerisats aus 95 Grundmol.% Octadecylmethacrylat und 5 Grundmol.% Hexadecylmethacrylat in Chloroform (Uvasol-Qualität) nach dem üblichen Verfahren bei 28°C gespreitet. Nach Verdunstung des Lösungsmittels wurde die Schicht komprimiert, bis der Oberflächendruck 15 mN/m war. Bei diesem Druck wurde die Schicht stabilisiert (≃ 1 Std.). Als die eingenommene Oberfläche konstant war, wurde eine Quartzplättchen, das mit Hexamethyldisilazan hydrophobiert war, vertikal nach dem Langmuir-Blodgett-Verfahren eingetaucht und mit einer Geschwindigkeit von 50 mm/Min aufgezogen. Die erste Schicht wurde beim Aufziehen übertragen, die nächste Schicht wurde schon beim Eintauchen übertragen (γ-Übertragung). Die Übertragung bei den nächsten Cyclen wurde mit einem Schreiber

verfolgt. Dabei waren die eingestellten Pausen: eingetaucht 34 Sekunden, außer Wasser 68 Sekunden. Auf diese Weise war es möglich, mindestens 49 Schichten mit konstantem Übertragungsverhältnis anzubringen.

Vergleichsbeispiel 1

Es wurde wie in Beispiel 1 gearbeitet, mit dem Unterschied, daß das Polymer ein isotaktisches Poly(octadecylmethacrylat) war, das praktisch keine Seitenketten-Uneinheitlichkeit und dasselbe Molekulargewicht aufwies. Dies resultierte in einer schnell abnehmenden Z-artigen Übertragung.

Vergleichsbespiel 2

Es wurde wie in Vergleichbeispiel 1 gearbeitet, mit dem Unterschied, daß die Temperatur 32°C betrug und der Druck 30 mN/n. Das Ergebnis war eine Z-artige abnehmende Übertragung.

Beispiel 2

Es wurde wie in Beispiel 1 gearbeitet, mit dem Unterschied, daß als Polymer ataktisches Poly(octadecyl-co-dodecylmethacrylat) (Grundmol % Dodecyleinheiten = 13%) verwendet wurde. Die Temperatur betrug 25°C und der Druck 11 mN/m. Das Ergebnis war eine anfangs Z-artige Übertragung, die in eine Y-Übertragung mit konstantem Übertragungsverhältnis überging.

Beispiel 3

Es wurde in Beispiel 1 gearbeitet, mit dem Unterschied, daß als Substrat eine Goldschicht, aufgedampft auf Glas verwendet wurde und der Druck 10 mN/m betrug. Es resultierte Y-Übertragung. Mindestens 49 Schichten mit konstantem Übertragungsverhältnis konnten übertragen werden.

Vergleichsbeispiel 3

Es wurde in Beispiel 1 gearbeitet, mit dem Unterschied, daß als Polymer ein ataktisches Poly(octadecylmethacrylat) benutzt wurde und der Druck 10 mN/m war. Das Ergebnis war fest keine Übertragung.

Beispiel 4

Es wurde in Beispiel 1 gearbeitet, mit dem Unterschied, daß als Polymer ein Copolykondensat aus γ-Methyl-L-glutamat und α-Octadecyl-L-glutamat benutzt wurde, die Temperatur 20°C und der Druck 25 mN/m betrug. Das Ergebnis war 100 %ige Übertragung bis mindestens 200 Schichten.

Vergleichsbeispiel 4

Es wurde in Beispiel 4 gearbeitet, mit dem Unterschied, daß als Polymer das Homopolymer Poly(γ-octadecyl-L-glutamat) benutzt wurde. Das Ergebnis war eine schnell abnehmende Y-Übertragung.

Vergleichsbeispiel 5

Es wurde in Beispiel 4 gearbeitet, mit dem Unterschied, daß die Temperatur 30°C war. Es resultierte eine abnehmende Übertragung ungefähr ab der 15. Schicht.

**Patentansprüche**

1. Verfahren zur Herstellung von dünnen Schichten organischer Polymerer mit langkettigen Seitengruppen auf einem festen Schichtträger, wobei das organische Polymere in einem organischen Lösungsmittel gelöst, nach der Langmuir-Blodgett-Tecknik an der Grenzfläche Wasser/Luft gespreitet und nach Verdunstung des organischen Lösungsmittels auf einen festen Schichtträger übertragen wird, das dadurch gekennzeichnet, daß als organische Polymere mit langkettigen Seitengruppen solche eingesetzt werden, die ausschließlich über polare Gruppen an die Hauptkette des Polymeren gebundene langkettige n-Alkylseitengruppen enthalten, mit der Maßgabe, daß diese langkettigen n-Alkylseitengruppen teilweise durch kürzerkettige n-Alkylseitengruppen, durch verzweigte Alkylseitengruppen mit gleicher oder niedrigerer Anzahl an Kohlenstoffatomen und/oder durch gleichlange, oder kürzere Seitengruppen mit mindestens einer C—C-Mehrfachbindung ersetzt sind.

2. Verfahren nach Anspruch 1, dadurch gekennzeichnet, daß die polaren Gruppen

—O—,

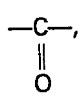

,

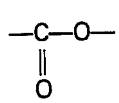

oder

—C—NH—
||
O

3. Verfahren nach Anspruch 1 oder 2, dadurch gekennzeichnet, daß als organische Polymere mit langkettigen Seitengruppen Copolymerisate eingesetzt werden.

4. Verfahren nach Anspruch 1 oder 2, dadurch gekennzeichnet, daß als organische Polymere mit langkettigen Seitengruppen Polykondensate eingesetzt werden.

5. Verfahren nach Anspruch 3, dadurch gekennzeichnet, daß als Copolymerisate solche aus

a) polymerisierten Einheiten einer n-Alkylester- oder n-Alkylethergruppen enthaltenden ethylenisch ungesättigten Verbindung mit mindestens 12 Kohlenstoffatomen im Alkylrest der Ester- oder Ethergruppe und

b) polymerisierten Einheiten mindestens einer weiteren von (a) verschiedenen Alkylester- oder Alkylethergruppen enthaltenden ethylenisch ungesättigten Verbindung, wobei der Alkylrest der Ester- oder Ethergruppe entweder eine geringere Anzahl Kohlenstoffatome aufweist als der von (a), verzweigt ist oder mindestens eine C—C Mehrfachbindung enthält,

eingesetzt werden.

6. Verfahren nach Anspruch 5, dadurch gekennzeichnet, daß als Copolymerisate solche eingesetzt werden, die als Alkylestergruppen enthaltende polymerisierbare ethylenisch ungesättigte Verbindungen Acrylsäure- oder Methacrylsäurealkylester einpolymerisiert enthalten.

7. Verfahren nach einem der Anspruch 5 oder 6, dadurch gekennzeichnet, daß das Copolymerisat als Komponente (a) einen Ester der (Meth-)acrylsäure mit 16 bis 36 Kohlenstoffatomen im n-Alkylrest der Estergruppe einpolymerisiert enthält.

8. Verfahren nach einem der Anspruch 5 bis 7, dadurch gekennzeichnet, daß das Copolymerisat als Komponente (b) einen Ester der (Meth-)acrylsäure mit 6 bis 16 Kohlenstoffatomen im Alkylrest der Estergruppe einpolymerisiert enthält.

9. Verfahren nach einem der Ansprüche 5 bis 8, dadurch gekennzeichnet, daß das Copolymerisat als Komponente (b) einen Ester der (Meth-)acrylsäure einpolymerisiert enthält, dessen Alkylrest der Estergruppe um mindestens 4 Kohlenstoffatome kürzer ist als der n-Alkylrest der Estergruppe der Komponente (a).

10. Verfahren nach einem der Ansprüche 1 bis 9, dadurch gekennzeichnet, daß das als organisches Polymeres eingesetzte Copolymerisat einen Polymerisationsgrad von 10 bis 200 aufweist.

11. Verfahren nach einem der Ansprüche 1 bis 3 und 5 bis 10, dadurch gekennzeichnet, daß das als organisches Polymeres eingesetzte Copolymerisat isotaktisch ist.

12. Verfahren nach einem der Anspruch 5 bis 11, dadurch gekennzeichnet, daß als organisches Polymeres eine Copolymerisat aus Octadecyl(meth)acrylat als Komponente (a) und einem Alkyl(meth)acrylat mit 6 bis 16 Kohlenstoffatomen in der Alkylgruppe als Komponente (b) eingesetzt wird.

13. Verfahren nach einem der Ansprüche 5 bis 12, dadurch gekennzeichnet, daß das als organisches Polymeres eingesetzte Copolymerisat 50 bis 99,5 Mol.-% der Komponente (a) und einem 0,5 bis 50 Mol.-% der Komponente (b) einpolymerisiert enthält.

14. Verfahren nach Anspruch 1 oder 2, dadurch gekennzeichnet, daß als organische Polymere Copolymerisate von Vinylethern eingesetzt werden.

15. Verfahren nach Anspruch 1, 2 oder 4, dadurch gekennzeichnet, daß als organisches Polymeres ein Polykondensat eingesetzt wird, das mindestens zwei voneinander verschiedene Ester- oder Etherseitengruppen enthält, wobei eine der Ester- oder Ethergruppen einen n-Alkylrest mit mindestens 12 Kohlenstoffatomen und die andere entweder einen Alkylrest mit geringerer Anzahl an Kohlenstoffatomen, eine Verzweigung oder mindestens 12 Kohlenstoffatomen und die andere entweder einen Alkylrest mit geringerer Anzahl an Kohlenstoffatomen, eine Verzweigung oder mindestens eine C—C-Mehrfachbindung aufweist.

16. Verfahren nach einem der Ansprüche 1, 2, 4 oder 15, dadurch gekennzeichnet, daß als organische Polymere Polykondensate mit helikaler Struktur eingesetzt werden.

17. Verfahren nach einem der Ansprüche 1, 2, 4, 15 oder 16, dadurch gekennzeichnet, daß als organische Polymere Polykondensate aus in γ-Stellung unterschiedlich alkylsubstituierten Copolyglutamaten eingesetzt werden.

18. Verfahren nach einem der Ansprüche 4 oder 15 bis 17, dadurch gekennzeichnet, daß als Polykondensat ein Copolykondensat aus γ-Alkyl-L-glutamat und γ-Alkyl'L-glutamat, worin Alkyl für einen Alkylrest mit 1 bis 6 Kohlenstoffatomen und Alkyl' für einen Alkylrest mit 12 bis 36 Kohlenstoffatomen stehen, eingesetz wird.

19. Verfahren nach einem der Ansprüche 4 oder 15 bis 18, dadurch gekennzeichnet, daß als Polykondensat ein Copolykondensat aus γ-Methyl-L-glutamat und γ-Octadecyl-L-glutamat eingesetzt wird.

20. Verfahren nach einem der vorhergehenden Ansprüche, dadurch gekennzeichnet, daß sich nach dem Aufbringen der dünnen Schichten auf den festen Schichtträger ein Temperprozeß anschließt.

21. Schichtelement mit einem Schichtträger und mindestens einer hierauf aufgbrachten festen, dünnen geordneten Schicht definierter einheitlicher und regelmäßiger Struktur mit gleichförmiger Molekülarientierung in einer Richtung von einem in einem organischen, mit Wasser nicht mischbaren

Lösungsmittel löslichen organischen Polymeren, dadurch gekennzeichnet, daß es nach einem Verfahren gemäß einem der Ansprüche 1 bis 20 hergestellt wurde.

**Revendications**

1. Procédé de préparation de couches minces de polymère organique à groupes latéraux à longue chaîne sur un support de couches solide, le polymère organique étant dissous dans un solvant organique, étendu, selon la technique de Langmuir-Blodgett, à la surface de séparation eau/air et, après évaporation du solvant organique transféré sur un support de couche solide, caractérisé par le fait que, comme polymères organiques à groupes latéraux à longue chaîne, on utilise ceux qui contiennent des groupes latéraux n-alkyle à longue chaîne liés à la chaîne principale du polymère exclusivement par des groupes polaires, à la condition que ces groupes latéraux n-alkyle à longue chaine soient substitués partiellement par des groupes latéraux n-alkyle à chaîne plus courte, par des groupes latéraux alkyle ramifiés ayant un nombre égal ou inférieur d'atomes de carbone et/ou par des groupes latéraux de même longueur ou plus courts ayant au moins une liaison multiple C—C—.

2. Procédé selon la revendication 1, caractérisé par le fait que les groupes polaires sont

—O—,

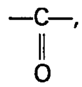

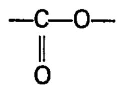 ou

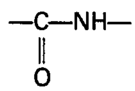

3. Procédé selon la revendication 1 ou 2, caractérisé par le fait que l'on utilise, comme polymères organiques à groupes latéraux à longue chaîne, des copolymerisats.

4. Procédé selon la revendication 1 ou 2, caractérisé par le fait que l'on utilise, comme polymères organiques, à groupes latéraux à longue chaîne, des polycondensats.

5. Procédé selon la revendication 3, caractérisé par le fait que l'on utilise comme copolymérisats ceux à:

a) motifs polymérisats d'un composé insaturé éthyléniquement contenant des groupes n-alkylique ou éther n-alkylique et ayant au moins 12 atomes de carbone dans le reste alkyle du groupe ester ou éther.

b) motifs polymérisés d'au moins un autre composé insaturé éthyléniquemente contenant des groupes ester alkylique ou éther alkylique différents de (a), le reste alkyle du groupe éther et ester soit possédant un nombre d'atomes de carbone plus petit que celui de (a), étant ramifié ou contenant au moins une liaison multiple C—C—.

6. Procédé selon la revendication 5, caractérisé par le fait que, comme copolymérisats, on utilise ceux qui contiennent, en polymérisation, des esters alkyliques d'acide acrylique ou méthacrylique, comme composés insaturés éthyléniquement polymérisables contenant des groupes ester alkylique.

7. Procédé selon l'une des revendications 5 à 6 caractérisé par le fait que le copolymérisat contient, en polymerisation, comme composant (a) un ester d'acide (méth)-acrylique ayant 16 à 36 atomes de carbone dans le reste n-alkyle du groupe ester.

8. Procédé selon l'une des revendications 5 à 7 caractérisé par le fait que le copolymérisat contient, en polymerisation, comme composant (b), un ester d'acide (méth)-acrylique ayant 6 à 16 atomes de carbone dans le reste alkyle du groupe ester.

9. Procédé selon l'une des revendications 5 à 8 caractérisé par le fait que le copolymérisat contient, en polymerisation, comme composant (b), un ester d'acide (méth)-acrylique dont le reste alkyle de groupe ester est plus court d'au moins 4 atomes de carbone que le reste n-alkyle du groupe ester du composant (a).

10. Procédé selon l'une des revendications 1 à 9, caractérisé par le fait que le copolymérisat utilisé comme polymère organique possède un degré de polymérisation de 10 à 200.

11. Procédé selon l'une des revendications 1 à 3 et 5 à 10 caractérisé par le fait que le copolymérisat utilisé comme polymère organique est isotactique.

12. Procédé selon l'une des revendications 5 à 11, caractérisé par le fait que l'on utilise, comme polymère organique, un copolymèrisat de (méth)-acrylate d'octadécyle comme composant (a) et un (méth)-acrylate d'alkyle ayant 6 à 16 atomes de carbone dans le groupe alkyle comme composant (b).

13. Procédé selon l'une des revendications 5 à 12, caractérisé par le fait que le copolymérisat utilisé comme polymère organique contient 50 à 99,5% (moles) du composant (a) et 0,5 à 50% (moles) du composant (b).

14. Procédé selon la revendication 1 ou 2, caractérisé par le fait que l'on utilise, comme polymères organiques, des copolymérisats d'éthers vinyliques.

15. Procédé selon la revendication 1, 2 ou 4, caractérisé par le fait que l'on utilise, comme polymère organique, un polycondensat qui contient au moins deux groupes latéraux ester ou ether différents l'un de l'autre, un des groupes ester ou éther possédant un reste n-alkyle d'au moins 12 atomes de carbone et l'autre possédant, soit un reste alkyle d'un nombre plus faible d'atomes de carbone, une ramification ou un moins une liaison multiple C—C-.

16. Procédé selon l'une des revendications 1, 2, 4 ou 15, caractérisé par le fait que l'on utilise comme polymère organique, des polycondensats à structure en hélice.

17. Procédé selon l'une des revendications 1, 2, 4, 15 ou 16, caractérisé par le fait que, comme polymères organiques, on utilise des polycondensats de copolyglutamates alkylsubstitués différemment en position γ.

18. Procédé selon l'une des revendications 4 ou 15 à 17, caractérisé par le fait que, comme polycondensat, on utilise un copolycondensat de L-glutamate de γ-alkyle et de L-glutamate de γ-alkylé, où alkyle est mis pour un reste alkyle de 1 à 6 atomes de carbone et alkylé pour un reste alkyle de 12 à 36 atomes de carbone.

19. Procédé selon l'une des revendications 4 ou 15 à 18, caractérisé par le fait que l'on utilisé, comme polycondensat, un copolycondensat de L-glutamate de γ-méthyle et un L-glutamate de γ-octadécyle.

20. Procédé selon l'une des revendications précédentes, caractérisé par le fait qu'après l'application de la couche mince sur le support de couche solide succède un traitement thermique.

21. Elément stratifié à un support de couche et au moins une couche ordonnée mince, solide, appliquée sur le support, de structure définie, unitaire et régulière à orientation moléculaire uniforme dans une direction, d'un polymère organique soluble dans un solvant organique non miscible avec l'eau, caractérisé par le fait qu'il est préparé par un procédé selon l'une des revendications 1 à 20.

**Claims**

1. A process for the production of thin films of organic polymers having long-chain side groups on a solid base material, the organic polymer being dissolved in an organic solvent, the solution being spread at the water/air interface by the Langmuir-Blodgett technique and the film being transferred onto a solid base material after evaporation of the organic solvent, wherein organic polymers which contain long-chain n-alkyl side groups bonded to the main chain of the polymer exclusively via polar groups are used as the organic polymers having long-chain side groups, with the proviso that some of these long-chain n-alkyl side groups are replaced by shorter-chain n-alkyl side groups, by branched alkyl side groups having the same or a smaller number of carbon atoms and/or by equally long or shorter side groups having one or more C—C multiple bonds.

2. A process as claimed in claim 1, wherein the polar groups are

—O—,

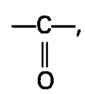

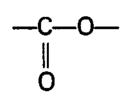 or

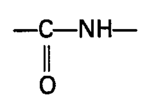

3. A process as claimed in claim 1 or 2, wherein a copolymer is used as the organic polymer having long-chain side groups.

4. A process as claimed in claim 1 or 2, wherein a polycondensate is used as the organic polymer having long-chain side groups.

5. A process as claimed in claim 3, wherein the copolymer used is a copolymer of

a) polymerized units of an ethylenically unsaturated compound containing n-alkyl ester or n-alkyl ether groups, where the alkyl radical of the ester or ether group is of not less than 12 carbon atoms, and

b) polymerized units of one or more further ethylenically unsaturated compounds which differ from (a) and contain alkyl ester or alkyl ether groups, the alkyl radical of the ester and ether groups having a smaller number of carbon atoms than that of (a), being branched or containing one or more C—C multiple bonds.

6. A process as claimed in claim 5, wherein the copolymer used is a copolymer which contains alkyl acrylates or methacrylates as copolymerized alkyl ester-containing polymerizable ethylenically unsaturated compounds.

7. A process as claimed in either of claims 5 or 6, wherein the copolymer contains, as copolymerized component (a), an ester of (meth)acrylic acid where the n-alkyl radical of the ester group is of 16 to 36 carbon atoms.

8. A process as claimed in any one of claims 5 to 7, wherein the copolymer contains, as copolymerized component (b), an ester of (meth)acrylic acid where the alkyl radical of the ester group is of 6 to 16 carbon atoms.

9. A process as claimed in any one of claims 5 to 8, wherein the copolymer contains, as copolymerized component (b), an ester of (meth)acrylic acid where the alkyl radical of the ester group is shorter than the n-alkyl radical of the ester group of component (a) by 4 or more carbon atoms.

10. A process as claimed in any one of claims 1 to 9, wherein the copolymer used as the organic polymer has a degree of polymerization of from 10 to 200.

11. A process as claimed in any one of claims 1 to 3 and 5 to 10, wherein the copolymer used as the organic polymer is isotactic.

12. A process as claimed in any one of claims 5 to 11, wherein the organic polymer used is a copolymer of octadecyl (meth)acrylate as component (a) and an alkyl (meth)acrylate, where alkyl is of 6 to 16 carbon atoms, as component (b).

13. A process as claimed in any one of claims 5 to 12, wherein the copolymer used as the organic polymer contains from 50 to 99.5 mol% of component (a) and from 0.5 to 50 mol% of component (b) as copolymerized units.

14. A process as claimed in claim 1 or 2, wherein the organic polymer used is a copolymer of a vinyl ether.

15. A process as claimed in claim 1, 2 or 4, wherein the organic polymer used is a polycondensate which contains two or more different ester or ether side groups, one of the ester or ether groups having an n-alkyl radical of 12 or more carbon atoms and the other having an alkyl radical with a smaller number of carbon atoms, a branch or one or more C—C multiple bonds.

16. A process as claimed in any one of claims 1, 2, 4 and 15, wherein the organic polymer used is a polycondensate having a helical structure.

17. A process as claimed in any one of claims 1, 2, 4, 15 and 16, wherein the organic polymer used is a polycondensate of copolyglutamates having different alkyl substituents in the γ-position.

18. A process as claimed in any one of claims 4 and 15 to 17, wherein the polycondensate used is a copolycondensate of γ-alkyl L-glutamate and γ-alkyl' L-glutamate, where alkyl is an alkyl radical of 1 to 6 carbon atoms and alkyl' is an alkyl radical of 12 to 36 carbon atoms.

19. A process as claimed in any one of claims 4 and 15 to 18, wherein the polycondensate used is a copolycondensate of γ-methyl L-glutamate and γ-octadecyl L-glutamate.

20. A process as claimed in any one of the preceding claims, wherein application of the thin films onto the solid base material is followed by a heating process.

21. A film element having a base material and, applied thereon, one or more solid, thin ordered films of defined uniform and regular structure with uniform molecular orientation in one direction, consisting of an organic polymer which is soluble in an organic, water-immiscible solvent, wherein the said film element is produced by a process as claimed in any one of claims 1 to 20.